# EUROPEAN PATENT APPLICATION

(11) **EP 1 292 136 A2**
(43) Date of publication of application: **12.03.2003**
(21) Application number: 02019855.2
(22) Date of filing: 09.09.2002
(51) Int. Cl.: H04N 5/76

(54) **Method for time-shifted reproduction of broadcast audio/video information**

(30) Priority: 11.09.2001 DE 10144636
(71) Applicant: TRW Automotive Electronics & Components GmbH & Co. KG, 78315 Radolfzell (DE)
(72) Inventor: Hafner, Ernst, D-88709 Hagnau (DE); Bubb, Peter, D-82194 Gröbenzeil (DE); Götz, Matthias, D-80796 München (DE)
(74) Representative: Degwert, Hartmut, Dipl.-Phys.

(57) **Abstract**

For time-shifted reproduction of broadcast audio/video information that is received continuously and, from case to case, suppressed from reproduction by information of a higher priority such as a traffic announcement, the temporarily suppressed information continues to be received and is buffered on a storage medium (M1). The stored information is kept on standby for time-shifted reproduction at the user's discretion.

## Description

The invention relates to a method for the time-shifted reproduction of broadcast audio/video information.

Modern radio receivers for vehicles (car radios) are equipped with traffic radio functions. They have two receivers, one of which, the background receiver, independent of the program that is being listened to, is tuned to a traffic radio station. The main receiver is tuned to the radio program of the user's choice. Thus, a distinction is made between a foreground receiver and a background receiver. When a current traffic announcement is received by the background receiver, the sound reproduction is switched over to the background receiver for the duration of the announcement. The audio information received by the foreground receiver for the duration of the announcement is suppressed and lost.

Luxury automobiles are equipped with a built-in television set. In order not to endanger the safety of the passengers, the display on the television monitor is blanked out when the vehicle is moving. Sound can continue to be received and listened to. Video information received while the vehicle is moving, however, is suppressed and lost.

The invention provides a method by which loss of information is avoided in both of the cases described above. According to the invention, the temporarily suppressed information is stored on a storage medium and kept on standby for time-shifted retrieval and reproduction at the user's discretion.

Two embodiments of the invention will now be disclosed with reference to the drawings, wherein
Fig. 1 is a block diagram of the first embodiment; and
Fig. 2 is a block diagram of the second embodiment.

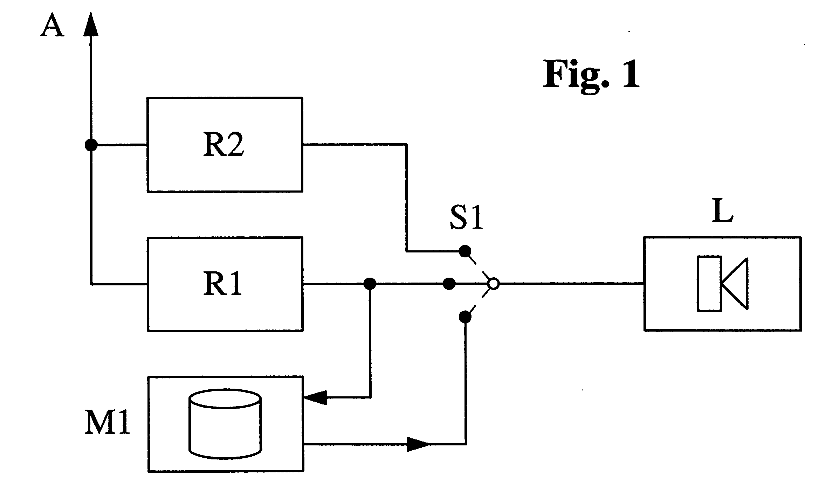

In the embodiment shown in Fig. 1, a radio installation in a vehicle includes a first receiver R1 and a second receiver R2. Both receivers R1 and R2 have an input connected to an antenna A. Receiver R1 is a main receiver that is tuned to a radio station of the user's choice. Receiver R2 is a background receiver that is automatically tuned to a radio station that occasionally transmits traffic announcements. A three-position switch S1 normally connects an output of receiver R1 to an input of an amplifier/loudspeaker set L. The output of receiver R1 is also permanently connected to an input of a storage medium M1. The storage medium M1 has a limited capacity of, for example, only a few minutes. The audio signals from the output of receiver R1 are continuously stored on storage medium M1. Preferably, the storage medium M1 is a digital solid-state memory such as a flash memory. As the full memory capacity of the storage medium is exhausted, its contents are progressively overwritten and replaced with current audio contents. Alternatively, only those audio contents from the output of receiver R1 are stored on storage medium M1 that are received while a traffic announcement is received with receiver R2.

In the normal, first position of switch S1 as shown in Fig. 1, the audio contents received with receiver R1 are reproduced by amplifier/loudspeaker set L. When a traffic announcement is received with receiver R2, switch S1 is controlled to a second position connecting the output of receiver R2 to the input of amplifier/loudspeaker set L. Accordingly, the audio contents received with receiver R1 are suppressed from reproduction, but they are not lost since they are stored of storage medium M1. When the traffic announcement is terminated, Switch S1 automatically returns to its normal first position, and reproduction of audio contents from receiver R1 is resumed. The user may now cause switch S1 to assume a third position to connect the output of storage medium M1 to the input of amplifier/loudspeaker set L, thereby allowing reproduction of audio contents received while a traffic announcement was transmitted and reproduced.

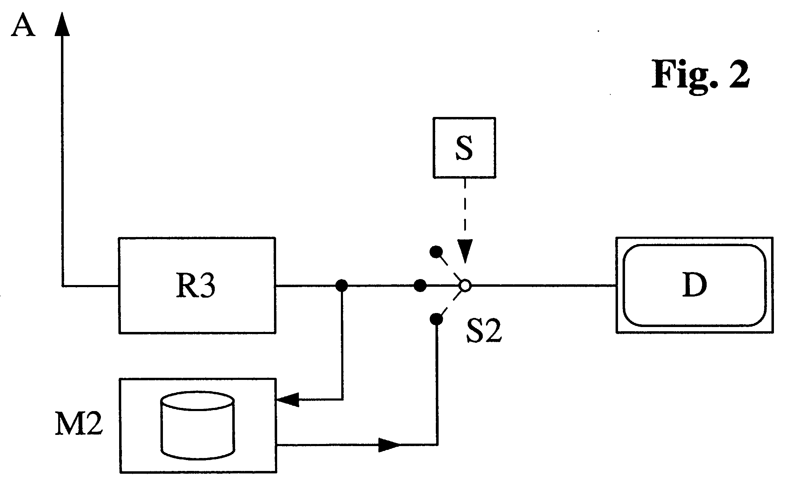

In the Fig. 2 embodiment, a vehicle is equipped with a television set. The television set includes a receiver R3 having an input connected to an antenna A and a display device D with a video input connected to an output of receiver R3 through a two-position switch S2. A storage medium M2 has an input connected to the output of receiver R3 and an output connected to a terminal of switch S2. Storage medium M2 may be a hard disk with a capacity to store a reasonable amount of video data. Switch S2 is controlled by a movement sensor S.

In the normal, first position of switch S2 shown in Fig. 2, the output of receiver R3 is applied to display device D for reproduction of corresponding video contents. When vehicle movement is detected by movement sensor S, switch S2 is controlled to a second position interrupting the connection between receiver R3 and display device D. Although the user may choose to continue listening to audio contents associated with the TV broadcast, reproduction of video contents is now suppressed. However, video contents are not lost since they are stored on storage medium M2. When the vehicle has come to a stop, the driver may want to view the video contents and, to this effect, would operate switch S2 to a third position connecting the output of storage medium M2 to the input of display device D. Preferably, video and corresponding audio contents are stored on storage medium M2 in a compressed data format to achieve a reasonable recording time with a moderate memory capacity.

## Claims

1. A method for time-shifted reproduction of broadcast audio/video information that is received continuously for reproduction in a vehicle, but occasionally and temporarily suppressed from reproduction, **characterized in that** the temporarily suppressed information is stored on a storage medium and kept on standby for time-shifted retrieval and reproduction.

2. The method according to Claim 1, wherein said suppressed information is replaced with audio information of a higher priority for reproduction in place of the suppressed information.

3. The mothod of Claim 2, wherein the information of a higher priority is a traffic announcement.

4. The method according to Claim 1, in which the continuously received information is a television broadcast, the sound of the television broadcast being constantly reproduced and the image is blanked out when the vehicle is moving, but it is stored on the storage medium.

5. The method according to any of the preceding claims, in which the storage on the storage medium is made in a compressed format.
